**Europäisches Patentamt**

**European Patent Office**

**Office européen des brevets**

(19)

(11) **EP 1 731 744 A1**

(12) **EUROPÄISCHE PATENTANMELDUNG**

(43) Veröffentlichungstag:
**13.12.2006 Patentblatt 2006/50**

(51) Int Cl.:
*F02D 41/14* (2006.01)  *G05B 13/04* (2006.01)

(21) Anmeldenummer: **05105009.4**

(22) Anmeldetag: **08.06.2005**

(84) Benannte Vertragsstaaten:
**AT BE BG CH CY CZ DE DK EE ES FI FR GB GR HU IE IS IT LI LT LU MC NL PL PT RO SE SI SK TR**
Benannte Erstreckungsstaaten:
**AL BA HR LV MK YU**

(71) Anmelder: **Ford Global Technologies, LLC.**
**Dearborn, MI 48126 (US)**

(72) Erfinder:
  • **Tumelaire, Charles**
   **52076, Aachen (DE)**

  • **Roettger, Daniel**
   **4731, Eynatten (BE)**
  • **Karvounis, Evangelos**
   **52070, Aachen (DE)**
  • **Vigild, Christian Winge**
   **52457 Aldenhoven (DE)**

(74) Vertreter: **Drömer, Hans-Carsten et al**
   **Ford-Werke Aktiengesellschaft,**
   **Patentabteilung NH/DRP,**
   **Henry-Ford-Strasse 1**
   **50725 Köln (DE)**

(54) **Verfahren zur Überwachung einer Regelung bzw. Steuerung eines Systems**

(57)    Die Erfindung betrifft ein Verfahren zur Überwachung einer Regelung bzw. Steuerung eines Systems (1), bei dem mindestens eine das System (1) charakterisierende Zustandsvariable *y* mittels Sensor (2) meßtechnisch erfaßt wird ($y_{mess}$).

Es soll ein Verfahren bereitgestellt werden, mit dem eine optimierte Steuerung bzw. Regelung ermöglicht wird.

Erreicht wird dies durch eine Verfahren der oben genannten Art, das dadurch gekennzeichnet ist, daß

■ die meßtechnisch erFaßte Zustandsvariable *($y_{mess}$)* mit einem berechneten Wert dieser Zustandsvariable *($y_{rech}$)* verglichen wird, wobei dieser rechnerisch ermittelte Wert *($y_{rech}$)* innerhalb einer Überwachungsstruktur (5) unter Verwendung mindestens eines Modells, das den Zustand bzw. die Dynamik des Systems (1) mittels Zustandvariablen *x*, *y* ... zumindest näherungsweise beschreibt, generiert wird,

■ die Abweichung *($\Delta y$)* zwischen der mindestens einen meßtechnisch erfaßten Zustandsvariable *($y_{mess}$)* und dem berechneten Wert dieser Zustandsvariable *($y_{rech}$)* bestimmt wird,

■ diese Abweichung *($\Delta y$)* der Überwachungsstruktur (5) als Eingangssignal zugeführt wird,

■ ein Regler (3), der unter Verwendung von Eingangssignalen *(e)* das System (1) mittels Regelsignalen *(u)* steuert bzw. regelt, mit innerhalb der Überwachungsstruktur (5) generierten Hilfssignalen *($y_{Schätz}$)* beaufschlagt wird, wobei der Überwachungsstruktur (5) die Regelsignale (u) des Reglers (3) als Eingangssignale zugeführt werden.

**Beschreibung**

Die Erfindung betrifft ein Verfahren zur Überwachung einer Regelung bzw. Steuerung eines Systems, insbesondere zur Überwachung einer Regelung bzw. Steuerung einer Brennkraftmaschine bzw. eines Teilsystems einer Brennkraftmaschine, bei dem mindestens eine das System charakterisierende Zustandvariable $y$ mittels Sensor meßtechnisch erfaßt wird ($y_{mess}$).

Das zu steuernde bzw. zu regelnde System kann beispielsweise die Kraftstoffeinspritzung, die Abgasrückführung, die Aufladung, die Bemessung der Zylinderfrischladung oder die Regelung der Zusammensetzung der Zylinderladung oder dergleichen sein oder eine Kombination aus den genannten Teilsystemen betreffen.

Im folgenden wird kurz auf die Steuerung moderner Brennkraftmaschinen im allgemeinen eingegangen, um die vielfältigen Probleme, die sich im Rahmen der Steuerung ergeben, aufzuzeigen und zu veranschaulichen. Der Gesetzgeber fordert immer geringere Schadstoffemissionen, was durch eine Verringerung des Kraftstoffverbrauchs grundsätzlich unterstützt wird, aber zudem durch innermotorische Maßnahmen, insbesondere eine optimierte Verbrennung, unterstützt werden muß *(Hier geht es vordergründig um die Kohlenstoffbilanz !).* Hierbei können Verfahren zur Steuerung der Brennkraftmaschine zielführend bzw. sachdienlich sein. Es werden immer komplexere und feiner abgestimmte Steuerungen erforderlich, um die gesetzlichen Grenzwerte einhalten zu können. In diesem Zusammenhang besteht auch zunehmend ein Bedarf zur Überwachung der Regelung bzw. Steuerung der Brennkraftmaschine d.h. an Verfahren, mit denen die Steuerung bzw. die Regelung optimiert und gegebenenfalls auftretenden Fehlern entgegen gewirkt wird.

Die Steuerung moderner Brennkraftmaschinen wird zunehmend komplexer, da neben der Einspritzung des Kraftstoffes und der Zündung des Kraftstoff-Luftgemisches als den maßgeblichen Betriebsparametern, welche den Verbrennungsprozeß beeinflussen, beispielsweise auch die Abgasrückführung d. h. die Menge an zurückgeführtem Abgas geregelt werden muß. Die Abgasrückführung wird dabei insbesondere zur Verbesserung des Emissionsverhaltens der Brennkraftmaschine hinsichtlich der Schadstoffe eingesetzt. Obwohl einerseits die Abgasrückführung aufgrund des abgesenkten Sauerstoffanteils der Zylinderladung grundsätzlich zu einer Erhöhung der CO- und HC-Emissionen führt, werden andererseits die unverbrannten Kohlenwasserstoffe (HC) und andere unvollständig oxidierte Schadstoffe wie Kohlenmonoxid (CO) erneut der Verbrennung zugeführt und können auf diese Weise weiter oxidiert werden, was die tatsächlichen Emissionen dieser Schadstoffe wieder senkt. Die Absenkung der Prozeßspitzentemperaturen infolge einer Abgasrückführung führt aber zu definitiv geringeren Stickoxidemissionen.

Dabei ist zu berücksichtigen, daß die Rückführung heißen Abgases in den Einlaßbereich der Brennkraftmaschine zwecks erneuter Zuführung im Rahmen des Ladungswechsels erheblichen Einfluß auf den Verbrennungsprozeß und damit auf das Betriebsverhalten der Brennkraftmaschine hat.

Die Rückführung heißer Abgase erhöht dabei grundsätzlich die Temperatur der Zylinderfrischladung, was die Füllung verschlechtert, wohingegen die Prozeßspitzentemperaturen gesenkt werden, da die Verbrennung infolge eines geringeren Sauerstoffanteils bzw. eines erhöhten Anteils an Inertgasen langsamer abläuft. Aus diesem Grund wird beispielsweise auch mit einer zunehmenden Menge an rückgeführtem Abgas der Zündzeitpunkt bzw. der Einspitzzeitpunkt nach früh verschoben, um auf diese Weise den veränderten Bedingungen, insbesondere der langsamer ablaufenden Verbrennung Rechnung zu tragen. Als Inertgase werden in diesem Zusammenhang sämtliche gasförmigen Bestandteile verstanden, die an den im Rahmen des Verbrennungsprozesses ablaufenden chemischen Reaktionen nicht teilnehmen.

Dieses Beispiel zeigt, daß die einzelnen Systeme - Einspritzung, Zündung und Abgasrückführung - untereinander in Wechselbeziehung zueinander stehen d.h. sich gegenseitig beeinflussen und daher auch nicht unabhängig voneinander gesteuert werden können. Wird die Menge an zurückgeführtem Abgas variiert, muß den veränderten Randbedingungen im Brennraum, insbesondere der veränderten Zusammensetzung der Zylinderfrischladung, durch eine Anpassung des Zündzeitpunktes und des Einspritzzeitpunktes Rechnung getragen werden.

Die Abstimmung der genannten Betriebsparameter bzw. Systeme - Abgasrückführung, Einspritzung oder Zündung - wird dadurch erschwert, daß die einzelnen Systeme ein unterschiedliches Ansprechverhalten aufweisen. Während die Einspritzparameter oder die Zündung vergleichsweise schnell mittels der Motorsteuerung variiert werden können, gewissermaßen von Arbeitsspiel zu Arbeitsspiel, reagiert die Abgasrückführung relativ träge.

Ein Grund hierfür ist darin zu sehen, daß es sich bei der Abgasrückführung - im Vergleich zu der elektronischen Einspritzung und Zündung - um ein mechanisch betätigtes System handelt, wobei die Menge an rückgeführtem Abgas durch Schließen und Öffnen eines Abgasrückführventils variiert wird. Des weiteren sorgt die Abgasleitung, mit dem die Verbrennungsgase in den Einlaßbereich zurückgeführt werden, bzw. das Gasvolumen dieser Leitung für ein verzögertes Ansprechverhalten der Abgasrückführung, so daß sich ein Verstellen des Abgasrückführventils gegebenenfalls erst nach einigen Arbeitsspielen auf die Zusammensetzung der Zylinderfrischladung und damit auf den Verbrennungsprozeß auswirkt.

Die Tatsache, daß Abgasrückführung und Brennraum einen Kreislauf bilden, führt dazu, daß die Veränderung der Abgasrückführrate und damit die Veränderung der Zylinderfrischladung wiederum die Zusammensetzung des Abgases und damit auch des zurückgeführten Abgases und der damit gespeisten späteren Zylinderfrischladung verändert, wodurch sich die Anforderungen an die Steuerung dieser in Wechselbeziehung zueinander stehenden dynamischen Systeme zusätzlich erhöhen.

Beim Übergang von einem Betriebspunkt der Brennkraftmaschine zu einem anderen Betriebspunkt werden somit einige Arbeitsspiele benötigt, um die einzelnen Betriebsparameter einzustellen bzw. aufeinander abzustimmen. Transiente Betriebsbedingungen erschweren somit die Steuerung bzw. Regelung der Systeme zusätzlich.

Die Anzahl der Systeme, die von der Motorsteuerung zu steuern und zu überwachen sind, nimmt weiter zu. Wird weiter berücksichtigt, daß sich eine Entwicklung hin zu hochaufgeladenen Motoren vollzogen hat und weiter vollzieht, kommt ein weiteres System hinzu, welches von der Motorsteuerung betätigt bzw. gesteuert werden muß und erheblichen Einfluß auf den Verbrennungsprozeß hat. Dabei ist die Aufladung in erster Linie ein Verfahren zur Leistungssteigerung, bei dem die für den motorischen Verbrennungsprozeß benötigte Luft verdichtet wird, so daß pro Arbeitsspiel eine größere Luftmasse in den Brennraum gelangt. Dadurch kann die Kraftstoffmasse gesteigert werden. Bei gezielter Auslegung der Aufladung können ebenfalls Vorteile im Wirkungsgrad und bei den Abgasemissionen erzielt werden.

Bei der Abgasturboaufladung, bei der die Abgasenergie zur Verdichtung der Verbrennungsluft eingesetzt wird, beeinflußt insbesondere die Abgasrückführung die Aufladung. Da die Abgasrückführung in der Regel vor der Turbine erfolgt, kann die dem Abgastrakt zwecks Rückführung entnommene Menge Abgas prinzipbedingt nicht mehr der Turbine des Abgasturboladers zugeführt werden, so daß die von der Turbine an den Verdichter abgegebene Leistung zur Verdichtung der Frischluft mit zunehmender Abgasrückführung abnimmt.

Auch die Abgasturboaufladung ist im Vergleich zur elektronischen Einspritzung oder der Zündung ein System, welches ein relativ träges Ansprechverhalten aufweist. Wird beispielsweise vom Fahrer eines Kraftfahrzeuges durch Betätigung des Gaspedals ein erhöhtes Drehmoment bzw. eine höhere Last angefordert, kann die elektronische Einspritzung ohne weiteres schnell angepaßt werden d.h. sehr zeitnah eine vergrößerte Menge an Kraftstoff in den Brennraum eingespritzt werden. Hingegen würde das träge Ansprechverhalten des Abgasturboladers dazu führen, daß die für die größere Menge Kraftstoff benötigte größere Menge Frischluft erst wesentlich später bereitgestellt wird.

Ohne Berücksichtigung der unterschiedlichen Ansprechverhalten bzw. der unterschiedlichen Reaktionszeiten der verschiedenen Systeme würde in dem zuletzt erwähnten Beispiel zunächst eine Anfettung des Gemisches stattfinden; mit erhöhten Emissionen an unverbrannten Kohlenwasserstoffen (HC), Kohlenmonoxid (CO) und vor allem Ruß. Daher wird ein spezieller zeit-/regelbasierter Filter, ein sogenannter Rußbegrenzer, eingesetzt, um sicher zu stellen, daß die Menge an eingespritztem Kraftstoff näherungsweise mit der bereitgestellten Frischluftmenge infolge der langsamer ansprechenden Aufladung korrespondiert.

Die zuvor gemachten Ausführungen verdeutlichen, daß durch die Vielzahl der zu steuernden bzw. zu regelnden und in Wechselbeziehung zueinander stehenden Systeme Konflikte aufgeworfen werden und insbesondere die unterschiedlichen Ansprechzeiten negative Auswirkungen haben. Insbesondere ergeben sich Nachteile hinsichtlich der Schadstoffemissionen, des Kraftstoffverbrauchs, aber auch hinsichtlich der Geräuschemissionen, da nicht aufeinander abgestimmte Betriebsparameter zu ungleichmäßigen Verbrennungsprozessen oder sogar zu Zündaussetzern führen.

Nach dem Stand der Technik kommen häufig Modelle, die den Zustand bzw. die Dynamik des zu steuernden bzw. zu regelnden Systems zumindest näherungsweise beschreiben, im Rahmen der Steuerung zum Einsatz.

Eine wesentliche Zustandvariable, die den Zustand der Brennkraftmaschine als zu steuerndes bzw. zu regelndes System beschreibt, ist der Zylinderdruck d.h. der Druck $p_{Zyl}$ im Brennraum eines Zylinders, der maßgeblich durch die Verbrennung des in den Brennraum eingespritzten Kraftstoffes mitbeeinflußt wird und der sich mit der Zeit d.h. über den Kurbelwinkel ändert. Der Druck $p_{Zyl}$ wird in der Regel mittels eines Drucksensor meßtechnisch erfaßt und als Eingangssignal einer Steuerung bzw. Regelung zugeführt. Die Qualität dieser Steuerung bzw. Regelung ist prinzipbedingt von der Qualität d.h. der Genauigkeit des ermittelten Drucks $p_{Zyl}$ abhängig, weshalb der Drucksensor die Meßgenauigkeit maßgeblich mitbestimmt.

Aus diesem Grund beschreibt beispielsweise die EP 0 399 069 A1 ein Verfahren zur Bestimmung des Brennraumdrucks in einem Zylinder einer Brennkraftmaschine mit einem Drucksensor. Dabei soll die Meßgenauigkeit des Drucksensors während des Betriebs der Brennkraftmaschine erhöht werden. Zur Kalibrierung des Drucksensors nutzt das vorgeschlagene Verfahren die Kinematik des Kurbeltriebes der Brennkraftmaschine in der Art, daß in einem definierten Kurbelwinkelbereich die Druckänderung im Brennraum des Zylinders aus einer polytropen Zustandsänderung ermittelt wird.

Zwar handelt es sich bei den realen Zustandsänderungen im Brennraum nicht um polytrope Zustandänderungen. Näherungsweise wird dies aber angenommen, um ein Modell bereitzustellen, auf dessen Basis eine Berechnung der Sensorempfindlichkeit möglich wird.

Dieses Beispiel soll nur verdeutlichen, daß im Rahmen der Steuerung bzw. Regelung einer Brennkraftmaschine häufig Modelle zum Einsatz kommen, die den Zustand des zu steuernden bzw. zu regelnden Systems nur näherungsweise beschreiben.

In einigen Betriebspunkten der Brennkraftmaschine ist die Messung einer Zustandsvariablen ($y_{mess}$) genauer und damit zuverlässiger als die Berechnung der entsprechenden Zustandsvariablen ($y_{rech}$) unter Verwendung eines Modells. Hingegen verhält es sich in anderen Betriebspunkten genau umgekehrt. Ein Verfahren zur Steuerung bzw. Regelung einer Brennkraftmaschine, welches diesem Umstand Rechnung trägt, wäre somit ein weiterer Fortschritt hinsichtlich der Reduzierung der Schadstoffemissionen eines Kraftfahrzeuges bzw. einer Brennkraftmaschine.

Vor diesem Hintergrund ist es die Aufgabe der vorliegenden Erfindung, ein Verfahren zur Überwachung einer Regelung bzw. Steuerung eines Systems gemäß dem Oberbegriff des Anspruches 1 aufzuzeigen, mit dem eine optimierte Steuerung bzw. Regelung ermöglicht wird und welches insbesondere zur Reduzierung der Schadstoffemissionen beiträgt.

Gelöst wird diese Aufgabe durch ein Verfahren zur Überwachung einer Regelung bzw. Steuerung eines Systems, insbesondere zur Überwachung einer Regelung bzw. Steuerung einer Brennkraftmaschine bzw. eines Teilsystems einer Brennkraftmaschine, bei dem

■ mindestens eine das System charakterisierende Zustandsvariable $y$ mittels Sensor meßtechnisch erfaßt wird ($y_{mess}$),

und das dadurch gekennzeichnet ist, daß

■ diese meßtechnisch erfaßte Zustandsvariable ($y_{mess}$) mit einem berechneten Wert dieser Zustandsvariable ($y_{rech}$) verglichen wird, wobei dieser rechnerisch ermittelte Wert ($y_{rech}$) innerhalb einer Überwachungsstruktur unter Verwendung mindestens eines Modells, das den Zustand bzw. die Dynamik des Systems mittels Zustandvariablen $x$, $y$ ... zumindest näherungsweise beschreibt, generiert wird,

■ die Abweichung ($\Delta y$) zwischen der mindestens einen meßtechnisch erfaßten Zustandsvariable ($y_{mess}$) und dem berechneten Wert dieser Zustandsvariable ($y_{rech}$) bestimmt wird,

■ diese Abweichung ($\Delta y$) der Überwachungsstruktur als Eingangssignal zugeführt wird,

■ ein Regler, der unter Verwendung von Eingangssignalen ($e$) das System mittels Regelsignalen ($u$) steuert bzw. regelt, mit innerhalb der Überwachungsstruktur generierten Hilfssignalen ($y_{schätz}$) beaufschlagt wird, wobei wiederum der Überwachungsstruktur die Regelsignale ($u$) des Reglers als Eingangssignale zugeführt werden.

Gemäß dem erfindungsgemäßen Verfahren wird die mindestens eine das System charakterisierende Zustandsvariable $y$ sowohl meßtechnisch erfaßt ($y_{mess}$), als auch unter Verwendung mindestens eines Models näherungsweise rechnerisch ermittelt ($y_{rech}$).

Indem die Abweichung ($\Delta y$) zwischen der mindestens einen meßtechnisch erfaßten Zustandsvariable ($y_{mess}$) und dem berechneten Wert dieser Zustandsvariable ($y_{rech}$) bestimmt wird, und diese Abweichung ($\Delta y$) der Überwachungsstruktur als Eingangssignal zugeführt wird, kann zum einen das mindestens eine von der Überwachungsstruktur verwendete Modell optimiert werden d. h. gewissermaßen lernen und dem realen System, welches das Modell versucht zu simulieren, angenähert werden.

Zum anderen gestattet die Bestimmung der Abweichung ($\Delta y$) und die Rückführung dieser Abweichung ($\Delta y$) als Eingangssignal in die Überwachungsstruktur, eine Aussage über die Verläßlichkeit d.h. über die Qualität der beiden für die mindestens eine Zustandsvariable $y$ ermittelten Werte zu treffen, nämlich des meßtechnisch erfaßten Wertes der Zustandsvariable ($y_{mess}$) einerseits und des berechneten Wertes der Zustandsvariable ($y_{rech}$) andererseits.

Damit wird des weiteren die Möglichkeit eröffnet, einen Schätzwert ($y_{Schätz}$) für den Wert der Zustandvariable $y$ zu ermitteln, mit

$$y_{Schätz} \approx A \cdot y_{rech} + B \cdot y_{mess}$$

wobei A und B Konstanten sind, die vom jeweiligen Betriebspunkt der Brennkraftmaschine abhängen und die eine geeignete Gewichtung des rechnerisch ermittelten Wertes ($y_{rech}$) und des gemessenen Wertes ($y_{mess}$) entsprechend ihrer Zuverlässigkeit bzw. Aussagekraft gestatten.

Diese Vorgehensweise zur Ermittlung eines Schätzwertes ($y_{Schätz}$) trägt dem Umstand Rechnung, daß in einigen Betriebspunkten der Brennkraftmaschine die Messung einer Zustandsvariable ($y_{mess}$) genauer und damit zuverlässiger als die Berechnung der entsprechenden Zustandsvariable ($y_{rech}$) unter Verwendung eines Modells ist und es sich in anderen Betriebspunkten genau umgekehrt verhält.

Dabei sind auch die beiden extremen Szenarien denkbar, daß nämlich ausschließlich eine der beiden ermittelten Werte für die mindestens eine Zustandsvariable $y$ Berücksichtigung findet und der jeweils andere Wert vernachlässigt wird. Der von der Überwachunasstruktur ermittelte Schätzwert kann daher lauten:

$$y_{Schätz} \approx y_{rech} \qquad (1)$$

oder

$$y_{Schätz} \approx y_{mess} \qquad (2)$$

Liefert beispielsweise der zur meßtechnischen Erfassung der mindestens einen Zustandsvariable *y* vorgesehene Sensor infolge eines sich während des Betriebes einstellenden Offsets, infolge einer fehlenden Kalibrierung oder infolge Zerstörung und damit fehlender Funktionstüchtigkeit des Sensors keine zuverlässigen und damit keine aussagekräftigen Werte für die Zustandsvariable *y,* wird die Überwachungsstruktur den Schätzwert ausschließlich auf den rechnerisch ermittelten Wert ($y_{rech}$) stützen (Gleichung (1)).

Dasselbe kann ebenfalls für Betriebspunkte gelten, in denen der Sensor prinzipbedingt nur sehr ungenaue Meßwerte liefert oder aber wenn es sich bei der mindestens einen Zustandsvariable *y* um eine Zustandsvariable *y* handelt, die a priori nicht meßtechnisch erfaßt wird.

Umgekehrt wird die Überwachungsstruktur in Betriebspunkten des Systems, in denen das reale System nicht mittels Modell simuliert werden kann, diese Modell keine zuverlässigen, aussagekräftigen Ergebnisse liefert oder ein solches Modell nicht vorhanden ist, den Schätzwert ausschließlich auf den meßtechnisch ermittelten Wert ($y_{mess}$) stützen (Gleichung (2)).

Insofern verfügt, daß erfindungsgemäße Verfahren über eine Redundanz, welche sicherstellt, daß in jedem Betriebspunkt des zu überwachenden Systems zumindest ein aussagekräftiger Wert für die mindestens eine Zustandsvariable *y* zur Verfügung steht. In Betriebspunkten, in denen sowohl ein meßtechnisch erfaßter Wert der Zustandsvariable ($y_{mess}$) als auch ein berechneter Wert der Zustandsvariable ($y_{rech}$) vorliegt, wird ein Schätzwert ($y_{Schätz}$) ermittelt.

Dieser Schätzwert ($y_{Schätz}$) wird dann einem Regler, der unter Verwendung von Eingangssignalen (*e*) das System mittels Regelsignalen (*u*) steuert bzw. regelt, als Hilfssignal zugeführt.

Die Regelsignale (*u*) werden der Überwachungsstruktur zugeführt, denn die Berechnung des Zustandes bzw. der Dynamik des Systems mittels Zustandvariablen x, *y ...* mittels Modellen erfordert die Kenntnis darüber, mit welchen Regelsignalen (*u*) und gegebenenfalls weiteren zusätzlichen Signalen - beispielsweise Referenzwerten und anderen äußeren Einflüssen (*e*) - das reale System beeinflußt d.h. gesteuert bzw. geregelt wird.

Dadurch, daß die Abweichung ($\Delta y$) zwischen der mindestens einen meßtechnisch erfaßten Zustandsvariable ($y_{mess}$) und dem berechneten Wert dieser Zustandsvariable ($y_{rech}$) bestimmt wird und diese Abweichung ($\Delta y$) der Überwachungsstruktur als Eingangssignal zugeführt wird, um einen Schätzwert ($y_{Schätz}$) zu ermitteln und/oder das mindestens eine verwendete Modell dem realen System anzunähern, kann die Steuerung bzw. Regelung überwacht und optimiert d.h. verfeinert werden.

Durch das erfindungsgemäße Verfahren wird somit die der Erfindung zugrunde liegende Aufgabe gelöst, nämlich ein Verfahren zur Überwachung einer Regelung bzw. Steuerung eines Systems, insbesondere zur Überwachung einer Regelung bzw. Steuerung einer Brennkraftmaschine bzw. eines Teilsystems einer Brennkraftmaschine, aufzuzeigen, mit dem eine optimierte Steuerung bzw. Regelung ermöglicht wird und welches, falls das System eine Brennkraftmaschine bzw. ein Teilsystem einer Brennkraftmaschine umfaßt, insbesondere zur Reduzierung der Schadstoffemissionen beiträgt.

Das erfindungsgemäße Verfahren findet beispielsweise bei einem Verfahren Anwendung, bei dem zur Steuerung einer mit einer elektronischen Kraftstoffeinspritzung und einer Abgasrückführung ausgestatteten Brennkraftmaschine, welche mittels einer Motorsteuerung steuerbar ist, die Zusammensetzung des Saugrohrgases bei der Bemessung der einzuspritzenden Kraftstoffmenge und/oder der Festlegung des Einspritzzeitpunktes und/oder der Festlegung des Zündzeitpunktes berücksichtigt wird.

Ein derartiges Verfahren ist in der Anmeldung 204 - 0915 offenbart, die von der Ford Global Technologies, LLC eingereicht wurde.

Die Zusammensetzung des Saugrohrgases, insbesondere der Anteil der Inertgase $F_{EIN,\,mess}$ ($y_{mess}$) am Saugrohrgas, kann dabei einerseits gemessen werden, indem mittels eines Sauerstoff-Sensors, vorzugsweise einer Lambda-Sonde, die SauerstoffKonzentration [m% oder Vol %] im Einlaßbereich erfaßt wird, wobei der verbleibende Anteil als Inertgasanteil [m% oder Vol %] betrachtet wird.

Zum anderen kann die Zusammensetzung des Saugrohrgases, insbesondere der Anteil der Inertgase $F_{EIN,\,rech}$

($y_{rech}$) am Saugrohrgas, näherungsweise rechnerisch bestimmt wird. Zur Bestimmung der Zusammensetzung des Saugrohrgases, insbesondere zur Ermittlung des Anteils $F_{EIN, RECH}$ der Inertgase am Saugrohrgas, kann dabei beispielsweise die folgende Differentialgleichung verwendet wird:

$$dF_{EIN}/dt = (\ dm_{AGR}/dt\ [F_{AGR} - F_{EIN}] + dm_{AF}/dt\ [0 - F_{EIN}]\ )\ m_{EIN}^{-1}$$

Dabei stellt $dF_{EIN}/dt$ die Änderung des Inertgasanteils $F_{EIN}$ der Zylinderfrischladung mit der Zeit t dar. Die Variable $dm_{AGR}/dt$ gibt den rückgeführten Abgasmassenstrom wieder, wobei $F_{AGR}$ den Anteil der Inertgase im Abgas darstellt. Die Variable $dm_{AF}/dt$ steht für den Massenstrom an Frischluft im Saugrohr und die Variable $m_{EIN}$ für die Gesamtmasse der Saugrohrladung, wobei gilt:

$$m_{EIN} = p_{EIN} \cdot V_{EIN} / (RT_{EIN})$$

Dabei steht $T_{EIN}$ für die Temperatur und $p_{EIN}$ für den Druck im Saugrohr.

Für die Änderung der Gesamtmasse $m_{EIN}$ mit der Zeit t gilt auch:

$$dm_{EIN}/dt = dm_{AT}/dt + dm_{AGR}/dt - dm_{AP}/dt$$

$$\approx dm_{AT}/dt + dm_{AGR}/dt - (p_{EIN} / R \cdot T_{EIN})\ V_d \cdot \eta_{Vol} \cdot n/120$$

Die Variable $dm_{AP}/dt$ ist dabei der gesamte Massestrom an den Einlaßventilen.

Dabei kann die Temperatur $T_{EIN}$ der Saugrohrladung mit einem im Einlaßbereich der Zylinder angeordneten Temperatursensor und der Druck $p_{EIN}$ der Saugrohrladung mit einem im Einlaßbereich angeordneten Drucksensor ermittelt bzw. erfaßt werden.

Ein Schätzwert $F_{EIN, Schätz}$ für den Anteil der Inertgase am Saugrohrgas wird ermittelt mit

$$F_{EIN, Schätz} \approx A \cdot F_{EIN,rech} + B \cdot F_{EIN,mess}$$

wobei A und B Konstanten sind, die vom jeweiligen Betriebspunkt der Brennkraftmaschine bestimmt werden und eine geeignete Gewichtung des rechnerisch ermittelten Anteils $F_{EIN,rech}$ und des gemessenen Anteils $F_{EIN,mess}$ gestatten.

Weitere vorteilhafte Varianten des Verfahrens werden im Zusammenhang mit den Unteransprüchen erörtert.

Vorteilhaft sind Ausführungsformen des Verfahrens, bei denen das von der Überwachungsstruktur verwendete Modell mindestens eine Zustandsgleichung zur Beschreibung der Dynamik des Systems verwendet, mit der die Zustandsänderung des Systems d.h. die Änderung der mindestens einen das System charakterisierenden Zustandsvariable $y$ mathematisch beschrieben wird, wobei mittels Integration der Zustand bzw. der aktuelle Wert der Zustandsvariable des Systems näherungsweise bestimmt wird und basierend auf diesem Wert der Zustandsvariable $y$ ein Ausgangssignal ($y_{rech}$) dieser Zustandsvariable $y$ generiert wird.

Bei dieser Ausführungsform umfaßt die Überwachungsstruktur zumindest drei Verfahrensschritte, wobei in einem ersten Schritt die Änderungen des Zustandes des Systems betrachtet werden. In einem zweiten Schritt werden mittels Integration der Zustandsänderungen Aussagen über den Zustand des Systems getroffen, in der Art, daß ein Schätzwert für die mindestens eine Zustandvariable $y$ generiert wird. Dieser Schätzwert, der dem Regler als Hilfssignal zur Verfügung gestellt wird, kann in einem dritten Schritt in ein Ausgangssignal ($y_{rech}$) dieser Zustandsvariable $y$ transformiert werden, um damit einen mit dem meßtechnisch erfaßten Wert der Zustandvariablen vergleichbaren Parameter zu generieren.

Vorteilhaft sind Ausführungsformen des Verfahrens, bei denen die Zustandsgleichungen thermodynamische Differentialgleichungen umfassen.

Vorteilhaft sind Ausführungsformen des Verfahrens, bei denen die thermodynamischen Differentialgleichungen die Änderungen von Druck $p_{EIN}$, Temperatur $T_{EIN}$ und/oder die Zusammensetzung $F_{EIN}$ als Zustandsvariablen des Gases im Einlaßbereich der Brennkraftmaschine beschreiben. Dabei bezeichnet $F_{EIN}$ den Anteil der Inertgase am Saugrohrgas.

Vorteilhaft sind Ausführungsformen des Verfahrens, bei denen die mindestens eine meßtechnisch erfaßte Zustandsvariable ($y_{mess}$) ein Vektor ist. Dieser k-dimensionale Vektor umfaßt dann *k* meßtechnisch erfaßte Zustandsvariablen, beispielsweise Werte für den Druck $p_{EIN}$ und die Temperatur $T_{EIN}$ im Einlaßbereich einer Brennkraftmaschine und den Anteil der Inertgase $F_{EIN}$ am Saugrohrgas. Der berechnete Wert dieser Zustandsvariablen ($y_{rech}$) und die Abweichung ($\Delta y$) sind dann prinzipbedingt Vektoren gleicher Dimension.

Vorteilhaft sind Ausführungsformen des Verfahrens, bei denen die mindestens eine meßtechnisch erfaßte Zustandsvariable ($y_{mess}$) ein Skalar ist. Dies ist gewissermaßen der Sonderfall eines eindimensionalen Vektors.

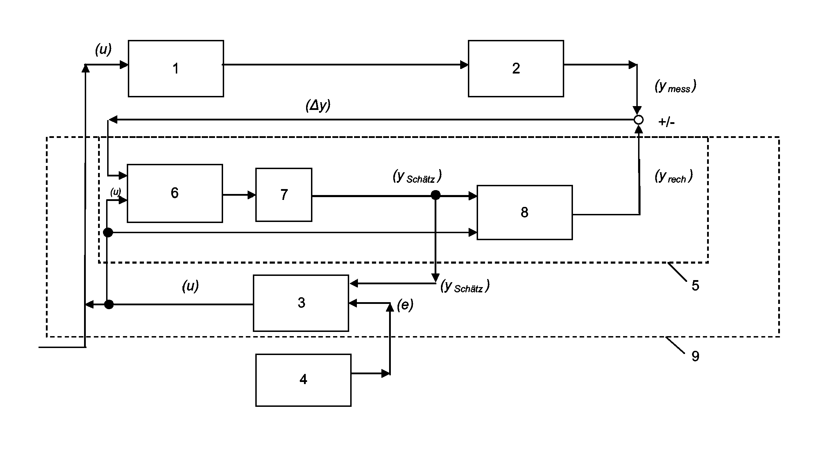

Im folgenden wird die Erfindung anhand eines Ausführungsbeispieles gemäß Figur 1 näher beschrieben. Hierbei zeigt:

Fig. 1   schematisch eine erste Ausführungsform einer Regelung unter Verwendung des erfindungsgemäßen Verfahrens.

Figur 1 zeigt schematisch eine erste Ausführungsform einer Regelung unter Verwendung des erfindungsgemäßen Verfahrens.

Das System 1 wird von einem Regler 3, dem eine Vielzahl von Eingangssignalen (*e*) zugeführt werden, mittels Regelsignalen (*u*) gesteuert bzw. geregelt. Die Eingangssignale (*e*) können Referenzwerte, Sollwerte, gemessene Werte, Konstanten oder dergleichen sein und sind symbolisch als Einheit 4 dargestellt.

Mindestens eine das System 1 charakterisierende Zustandsvariable *y* wird mittels eines Sensors 2 meßtechnisch erfaßt, so daß ein meßtechnisch erfaßter Wert ($y_{mess}$) für diese mindestens eine Zustandsvariable *y* vorliegt.

Die meßtechnisch erfaßte Zustandsvariable ($y_{mess}$) wird mit einem berechneten Wert dieser Zustandsvariable ($y_{rech}$) verglichen, wobei die Abweichung ($\Delta y$) zwischen dem meßtechnisch erfaßten Wert der Zustandsvariable ($y_{mess}$) und dem berechneten Wert dieser Zustandsvariable ($y_{rech}$) bestimmt wird. Die auf diese Weise ermittelte Abweichung ($\Delta y$) wird dann einer Überwachungsstruktur 5 als Eingangssignal zugeführt.

Die Vorraussetzung zur Bestimmung einer Abweichung ist, daß sowohl ein meßtechnisch erfaßter Wert für die Zustandsvariable ($y_{mess}$) als auch ein berechneter Wert dieser Zustandsvariablen ($y_{rech}$) vorliegt. In diesem Fall kann durch geeignete Regelsignale (*u*) eine Anpassung des Systems 1 erfolgen, um die Abweichung zu reduzieren. Es liegt eine geschlossene Überwachungsstruktur 5 vor. Andernfalls liegt eine offene Überwachungsstruktur 5 vor, wenn keine meßtechnisch erfaßten Werte zur Verfügung stehen, mit denen eine Abweichung von rechnerisch ermittelten Werten bestimmt werden könnte.

Innerhalb dieser Überwachungsstruktur 5 wird der für die Bestimmung der Abweichung ($\Delta y$) erforderliche rechnerisch ermittelte Wert ($y_{rech}$) der Zustandsvariable *y* unter Verwendung mindestens eines Modells 6 generiert. Die verwendeten Modelle 6 beschreiben den Zustand bzw. die Dynamik des zu steuernden bzw. zu regelnden Systems 1 mittels Zustandvariablen *x, y* ... zumindest näherungsweise.

Hiezu werden der Überwachungsstruktur 5 auch die Regelsignale (*u*) zugeführt, mit denen der Regler 3 das System 1 steuert bzw. regelt, denn die Berechnung des Zustandes bzw. der Dynamik des Systems 1 mittels Zustandvariablen erfordert auch Kenntnisse darüber, mit welchen Regelsignalen (*u*) und gegebenenfalls weiteren zusätzlichen Signalen - beispielsweise Referenzwerten und anderen äußeren Einflüssen (*e*) - das reale System 1 beeinflußt wird.

Für die Zustandsvariable *y* wird demnach sowohl ein meßtechnisch erfaßter Wert der Zustandsvariable ($y_{mess}$) als auch ein berechneter Wert der Zustandsvariable ($y_{rech}$) ermittelt. Ausgehend von diesen beiden Werten wird ein Schätzwert ($y_{Schätz}$) für die Zustandsvariable *y* ermittelt.

Da das von der Überwachungsstruktur 5 verwendete Modell die Zustandsänderung des Systems 1 d.h. die Änderung der mindestens einen das System 1 charakterisierenden Zustandsvariable *y* beschreibt, ist zur Bestimmung des Zustandes bzw. des aktuellen Wertes ($y_{Schätz}$) der Zustandsvariable *y* ein Integrator 7 vorgesehen.

Der Schätzwert ($y_{Schätz}$) wird einerseits dem Regler 3 als Hilfssignal zugeführt. Andererseits wird basierend auf diesem Wert ($y_{Schätz}$) der Zustandsvariable *y* ein Ausgangssignal ($y_{rech}$) dieser Zustandsvariable *y* generiert d.h. der Schätzwert ($y_{Schätz}$) der Zustandsvariable *y* wird in geeigneter Weise transformiert, um einen mit dem meßtechnisch erfaßten Wert der Zustandvariable vergleichbaren Wert bereitzustellen. Diese Transformation wird in einer Einheit 8 zur Generierung des Ausgangssignals ($y_{rech}$) vorgenommen.

Die Überwachungsstruktur 5 umfaßt somit bei der in Figur 1 dargestellten Ausführungsform drei Komponenten, nämlich die Einheit 6 zur Erfassung der Dynamik bzw. der Änderungen des Systems 1, welche mindestens ein Modell 6 verwendet, einen Integrator 7 zur Generierung des aktuellen Wertes ($y_{Schätz}$) der mindestens einen Zustandsvariable

$y$ und eine Einheit 8 zur Generierung des Ausgangssignals ($y_{rech}$), mit der der Schätzwert ($y_{Schätz}$) der Zustandsvariable $y$ in geeigneter Weise transformiert wird.

Die Überwachungsstruktur 5 mitsamt Regler 3 kann als Überwachungsregelstruktur 9 bezeichnet werden.

**Bezugszeichen**

| | |
|---|---|
| 1 | System |
| 2 | Sensor |
| 3 | Regler |
| 4 | Eingangsignale |
| 5 | Überwachungsstruktur |
| 6 | Modell, Einheit zur Erfassung der Dynamik bzw. der Änderungen des Systems |
| 7 | Integrator |
| 8 | Einheit zur Generierung des Ausgangssignals |
| 9 | Überwachungsregelstruktur |

| | |
|---|---|
| A | Konstante |
| B | Konstante |
| $dF_{EIN}/dt$ | Änderung des Inertgasanteils der Zylinderfrischladung mit der Zeit |
| $dm_{AGR}/dt$ | rückgeführter Abgasmassenstrom |
| $dm_{AF}/dt$ | Massenstrom an Frischluft im Saugrohr |
| $dm_{AP}/dt$ | gesamter Massestrom an den Einlaßventilen |
| $e$ | Eingangssignale |
| $F_{AGR}$ | Anteil der Inertgase im Abgas |
| $F_{EIN}$ | Anteil der Inertgase am Saugrohrgas |
| $F_{EIN, mess}$ | gemessener Inertgasanteil |
| $F_{EIN, rech}$ | rechnerisch ermittelter Inertgasanteil |
| $F_{EIN, Schätz}$ | geschätzter Inertgasanteil |
| $k$ | Anzahl der Dimensionen eines Vektors |
| $m_{EIN}$ | Gesamtmasse der Saugrohrladung |
| n | Drehzahl |
| $p_{EIN}$ | Druck im Einlaßbereich einer Brennkraftmaschine |
| $p_{Zyl}$ | Druck im Brennraum |
| R | Gaskonstante |
| t | Zeit |
| $T_{EIN}$ | Temperatur im Einlaßbereich einer Brennkraftmaschine |

| | |
|---|---|
| $u$ | Regelsignale |
| $V_{EIN}$ | Volumen der Gesamtmasse der Saugrohrladung |
| Vol % | Volumenprozent |
| $V_d$ | Hubraum der Brennkraftmaschine |
| $x$ | Zustandsvariable |
| $y$ | Zustandsvariable |
| $y_{mess}$ | mittels Sensor meßtechnisch erfaßter Wert der Zustandsvariable $y$ |
| $y_{rech}$ | unter Verwendung eines Modells rechnerisch ermittelter Wert der Zustandsvariable $y$ |
| $y_{Schätz}$ | geschätzter Wert der Zustandsvariable $y$ |
| $\Delta y$ | Abweichung zwischen ($y_{mess}$) und ($y_{rech}$) |
| $\eta_{Vol}$ | volumetrischer Wirkungsgrad der Brennkraftmaschine |

**Patentansprüche**

1. Verfahren zur Überwachung einer Regelung bzw. Steuerung eines Systems (1), insbesondere zur Überwachung einer Regelung bzw. Steuerung einer Brennkraftmaschine bzw. eines Teilsystems einer Brennkraftmaschine, bei dem

■ mindestens eine das System (1) charakterisierende Zustandsvariable *y* mittels Sensor (2) meßtechnisch erfaßt wird ($y_{mess}$),

**dadurch gekennzeichnet, daß**

■ diese meßtechnisch erfaßte Zustandsvariable ($y_{mess}$) mit einem berechneten Wert dieser Zustandsvariable ($y_{rech}$) verglichen wird, wobei dieser rechnerisch ermittelte Wert ($y_{rech}$) innerhalb einer Überwachungsstruktur (5) unter Verwendung mindestens eines Modells, das den Zustand bzw. die Dynamik des Systems (1) mittels Zustandvariablen *x, y* ... zumindest näherungsweise beschreibt, generiert wird,
■ die Abweichung ($\Delta y$) zwischen der mindestens einen meßtechnisch erfaßten Zustandsvariable ($y_{mess}$) und dem berechneten Wert dieser Zustandsvariable ($y_{rech}$) bestimmt wird,
■ diese Abweichung ($\Delta y$) der Überwachungsstruktur (5) als Eingangssignal zugeführt wird,
■ ein Regler (3), der unter Verwendung von Eingangssignalen (*e*) das System (1) mittels Regelsignalen (*u*) steuert bzw. regelt, mit innerhalb der Überwachungsstruktur (5) generierten Hilfssignalen ($y_{Schätz}$) beaufschlagt wird, wobei der Überwachungsstruktur (5) die Regelsignale (*u*) des Reglers (3) als Eingangssignale zugeführt werden.

2.  Verfahren nach Anspruch 1, **dadurch gekennzeichnet, daß**

■ das in der Überwachungsstruktur (5) verwendete Modell mindestens eine Zustandsgleichung zur Beschreibung der Dynamik des Systems (1) verwendet, mit der die Zustandsänderung des Systems (1) d.h. die Änderung der mindestens einen das System (1) charakterisierenden Zustandsvariable *y* mathematisch beschrieben wird, wobei mittels Integration der Zustand bzw. der aktuelle Wert ($y_{Schätz}$) der Zustandsvariable des Systems (1) näherungsweise bestimmt wird und basierend auf diesem Wert der Zustandsvariable *y* ein Ausgangssignal ($y_{rech}$) dieser Zustandsvariable *y* generiert wird.

3.  Verfahren nach Anspruch 2, **dadurch gekennzeichnet, daß**

■ die mindestens eine Zustandsgleichung eine thermodynamische Differentialgleichung umfaßt.

4.  Verfahren nach Anspruch 3, **dadurch gekennzeichnet, daß**

■ die thermodynamische Differentialgleichung die Änderungen von Druck $p_{EIN}$, Temperatur $T_{EIN}$ und/oder die Zusammensetzung $F_{EIN}$ als Zustandsvariable des Gases im Einlaßbereich der Brennkraftmaschine beschreibt.

5.  Verfahren nach einem der Ansprüche 1 bis 4, **dadurch gekennzeichnet, daß**

■ die mindestens eine meßtechnisch erfaßte Zustandsvariable ($y_{mess}$) ein Vektor ist.

6.  Verfahren nach einem der Ansprüche 1 bis 4, **dadurch gekennzeichnet, daß**

■ die mindestens eine meßtechnisch erfaßte Zustandsvariable ($y_{mess}$) ein Skalar ist.

Europäisches
Patentamt

**EUROPÄISCHER RECHERCHENBERICHT**

Nummer der Anmeldung

EP 05 10 5009

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 0 786 709 A (ABB PATENT GMBH) 30. Juli 1997 (1997-07-30) | 1,2,5,6 | F02D41/14 G05B13/04 |
| Y | * das ganze Dokument * ----- | 3,4 | |
| Y | DE 198 30 300 A1 (ROBERT BOSCH GMBH) 13. Januar 2000 (2000-01-13) * Spalte 1, Zeile 1 - Zeile 14 * * Spalte 1, Zeile 38 - Spalte 2, Zeile 28 * ----- | 3,4 | |
| X | DE 197 38 824 A1 (ABB PATENT GMBH, 68309 MANNHEIM, DE) 11. März 1999 (1999-03-11) | 1,2,5,6 | |
| Y | * Zusammenfassung * * Spalte 1, Zeile 1 - Spalte 2, Zeile 58 * * Spalte 6, Zeile 3 - Zeile 20 * * Abbildung 2 * ----- | 3,4 | |
| X | DE 197 51 375 A1 (OBERMEIER, CHRISTIAN, DIPL.-ING., 85077 MANCHING, DE) 27. Mai 1999 (1999-05-27) * Seite 3, Zeile 24 - Seite 4, Zeile 11 * * Abbildung 1 * ----- | 1,2,5,6 | |
| A | WO 02/19043 A (BROOKS AUTOMATION, INC) 7. März 2002 (2002-03-07) * Zusammenfassung * * Seite 4, Zeile 10 - Seite 6, Zeile 3 * * Seite 7, Zeile 11 - Seite 15, Zeile 20 * * Abbildung 1 * ----- | 1-6 | |

RECHERCHIERTE SACHGEBIETE (Int.Cl.7)

F02D
G05B

Der vorliegende Recherchenbericht wurde für alle Patentansprüche erstellt

| Recherchenort | Abschlußdatum der Recherche | Prüfer |
|---|---|---|
| München | 26. Oktober 2005 | Wettemann, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...........................................................................
& : Mitglied der gleichen Patentfamilie, übereinstimmendes Dokument

EPO FORM 1503 03.82 (P04C03)

**EP 1 731 744 A1**

| Im Recherchenbericht angeführtes Patentdokument | | Datum der Veröffentlichung | Mitglied(er) der Patentfamilie | | | Datum der Veröffentlichung |
|---|---|---|---|---|---|---|
| EP 0786709 | A | 30-07-1997 | KEINE | | | |
| DE 19830300 | A1 | 13-01-2000 | GB | 2339307 | A | 19-01-2000 |
| | | | JP | 3370954 | B2 | 27-01-2003 |
| | | | JP | 2000038960 | A | 08-02-2000 |
| | | | US | 6247457 | B1 | 19-06-2001 |
| DE 19738824 | A1 | 11-03-1999 | KEINE | | | |
| DE 19751375 | A1 | 27-05-1999 | KEINE | | | |
| WO 0219043 | A | 07-03-2002 | AU | 7710701 | A | 13-03-2002 |
| | | | CN | 1623125 | A | 01-06-2005 |
| | | | EP | 1319201 | A1 | 18-06-2003 |
| | | | JP | 2004507827 | T | 11-03-2004 |
| | | | US | 6567711 | B1 | 20-05-2003 |

EPO FORM P0461

**EP 1 731 744 A1**

**IN DER BESCHREIBUNG AUFGEFÜHRTE DOKUMENTE**

**In der Beschreibung aufgeführte Patentdokumente**

- EP 0399069 A1